# EUROPÄISCHE PATENTSCHRIFT

(11) **EP 2 427 510 B1**
(45) Veröffentlichungstag und Bekanntmachung des Hinweises auf die Patenterteilung: **06.11.2013**
(21) Anmeldenummer: 10772045.0
(22) Anmeldetag: 04.05.2010
(51) Int. Cl.: C08G 18/42, C08G 63/18, C08G 63/66, C08G 63/87, C08G 63/91

(54) **VERFAHREN ZUR HERSTELLUNG VON POLYESTERPOLYOLEN MIT SEKUNDÄREN OH-ENDGRUPPEN**
METHOD FOR PRODUCING POLYESTER POLYOLS HAVING SECONDARY OH TERMINAL GROUPS
PROCÉDÉ POUR PRODUIRE DES POLYOLS DE POLYESTER COMPORTANT DES GROUPES TERMINAUX OH SECONDAIRES

(30) Priorität: 06.05.2009 EP 09006162
(43) Veröffentlichungstag der Anmeldung: 14.03.2012
(73) Patentinhaber: Bayer Intellectual Property GmbH, 40789 Monheim (DE)
(72) Erfinder: NEFZGER, Hartmut, 50259 Pulheim (DE); BAUER, Erika, 41363 Jüchen (DE); HOFMANN, Jörg, 47800 Krefeld (DE); LORENZ, Klaus, 41539 Dormagen (DE); KLESCZEWSKI, Bert, 51069 Köln (DE)
(74) Vertreter: BIP Patents
(86) Internationale Anmeldenummer: PCT/EP2010/002697
(87) Internationale Veröffentlichungsnummer: WO 2010/127823

(56) Entgegenhaltungen:
- DE-A1- 3 613 875
- US-A- 4 144 395

## Beschreibung

Die vorliegende Erfindung betrifft ein Verfahren zur Herstellung von Polyesterpolyolen mit sekundären Hydroxyl-Endgruppen, umfassend den Schritt der Reaktion eines Carboxyl-Endgruppen umfassenden Polyesters mit einem Epoxid. Sie betrifft weiterhin nach diesem Verfahren erhältliche Polyesterpolyole mit sekundären Hydroxyl-Endgruppen und ein Polyurethanpolymer, erhältlich aus der Reaktion eines Polyisocyanats mit solchen Polyesterpolyolen.

Für die Herstellung von Polyurethanpolymeren technisch relevante Polyesterpolyole weisen als Folge der zu ihrem Aufbau verwendeten α,ω-Diole primäre Hydroxyl-Endgruppen auf. Der Einsatz von Diolen mit vollständig oder teilweise sekundären Hydroxyl-Endgruppen wie etwa 1,2-Propylenglykol oder Dipropylenglykol führt zu Polyesterpolyolen, die bezüglich der Endgruppen in etwa so ausgestattet sind wie die sie aufbauenden Diole. Im Fall von 1,2-Propylenglykol wären circa 50% der Hydroxyl-Endgruppen sekundär.

Diole, welche nur sekundäre Hydroxyl-Endgruppen aufweisen wie zum Beispiel 2,3-Butandiol spielen aufgrund der im Markt zur Verfügung stehenden Mengen und des Preises im technischen Maßstab keine Rolle. Erschwerend kommt bei allen sekundäre Hydroxyl-Gruppen aufweisenden Diolen in der Polyestersynthese hinzu, dass die Umsetzungsgeschwindigkeit mit Dicarbonsäuren geringer ist.

Von besonderem Nachteil ist weiterhin, dass die Eigenschaften der aus derartigen Polyestern hergestellten Polyurethane als Folge der zahlreichen kurzen Alkylseitengruppen deutlich schlechter sind als die von solchen Polyurethanen, die aus α,ω-Diolen erhalten werden. Demzufolge sind konventionelle Polyesterpolyole, die mit den erwähnten Diolen mit zumindest teilweise sekundären Hydroxyl-Endgruppen hergestellt werden, sowohl teurer in den Fertigungskosten, zum Teil teurer in den Materialkosten als auch weniger geeignet zur Herstellung von hochwertigen Polyurethanen. Deswegen haben Polyesterpolyole mit sekundären Hydroxyl-Endgruppen im Gegensatz zu Polyetherpolyolen bislang technisch keine relevante Bedeutung.

Es wäre wünschenswert, Polyesterpolyole zur Verfügung zu haben, die in ihrem Inneren α,ω-Diol-Einheiten enthalten und an ihrem Kettenende eine Einheit mit sekundären Hydroxyl-Gruppen. Ein derartiger Aufbau hätte eine verringerte Reaktivität gegenüber Polyisocyanaten zur Folge und ermöglicht es beispielsweise im Bereich der Polyurethan-Weichschäume, neben den Aminkatalysatoren, die hauptsächlich die Wasser-Reaktion treiben, auch zusätzliche Urethanisierungskatalysatoren wie Zinnsalze einzusetzen. Insbesondere eröffnet sich dadurch die im Bereich der Polyether-Polyurethanschäume breit genutzte Möglichkeit, diese beiden Reaktionen besser aufeinander abzustimmen und dadurch zum Beispiel Verarbeitungsvorteile bei der Herstellung von Polyester-Polyurethan-Weichschäumen zu erhalten.

Die Funktionalisierung von Carboxylgruppen bei der Polyester-Polyolsynthese wird in DE 36 13 875 A1 offenbart. Zur Herstellung von Polyester-Polyolen mit einer Säurezahl von kleiner als 1, einer Hydroxylzahl von ungefähr 20 bis ungefähr 400 und einer Funktionalität von zweckmäßigerweise 2 bis 3 werden Polycarbonsäuren und/oder deren Anhydride und mehrwertige Alkohole kondensiert. Dieses geschieht vorteilhafterweise in Abwesenheit von üblichen Veresterungskatalysatoren bei Temperaturen von 150 °C bis 250 °C und gegebenenfalls unter vermindertem Druck. Es wird bis zu einer Säurezahl von 20 bis 5 polykondensiert und die erhaltenen Polykondensate danach pro Carboxylgruppe mit 1 bis 5 Mol Alkylenoxid, zum Beispiel 1,2-Propylenoxid und/oder vorzugsweise Ethylenoxid, in Gegenwart eines tertiären Amins alkoxyliert. Das tertiäre Amin ist ausgewählt aus der Gruppe N-Methylimidazol, Diazabicyclo-[2,2,2]octan, Diazabicyclo[5,4,0]undec-7-en und Pentamethyl-diethylen-triamin. Der Katalysator wird zweckmäßigerweise in einer Menge von 0,001 bis 1,0 Gewichts-%, bezogen auf das Polykondensatgewicht, eingesetzt. Vorteilhafterweise wird bei Temperaturen von 100 °C bis 170 °C und unter einem Druck von 1 bis 10 bar alkoxyliert.

Im Verfahren gemäß DE 36 13 875 A1 wird das Veresterungsgemisch bis zu einer Säurezahl von 20 bis 5 polykondensiert. Es wird als wesentlich angegeben, dass die Schmelzkondensation nicht zu früh abgebrochen wird. Werde beispielsweise bei einer Säurezahl von 25 oder größer alkoxyliert, so sei der Wassergehalt des Veresterungsgemischs über Gebühr hoch. Dieses würde jedoch unerwünschte Nebenreaktionen zur Folge haben. Wenn die Synthese der Polyester bei einer Säurezahl von 20 bis 5 abgebrochen wird, bedeutet dieses, dass bereits ein vergleichsweise hoher Anteil an terminalen, aus der Alkoholkomponente stammenden und daher in der Regel primären Hydroxyl-Gruppen vorliegt. Die verbliebenen Carboxyl-Gruppen werden zur Verkürzung der Synthesezeit dann mit Epoxiden umgesetzt, wobei terminale, aus den Epoxiden stammende Hydroxyl-Gruppen erhalten werden.

EP. 0 010 804 A1 offenbart eine Pulverbeschichtung auf der Basis von Carboxylgruppenterminierten Polyesters, einer Epoxyverbindung und einer Cholinverbindung der Formel [Y-CH₂-CH₂-N-(-CH₃)₃]⁺ₙXⁿ⁻, in der X OR oder -O-C(O)-R ist und R Wasserstoff oder eine C₁₋₄₀-Gruppe ist und Xⁿ⁻ ein Anion ist. Vorzugsweise ist Y OH oder eine Gruppe -O-C(O)-R. Diese Pulverbeschichtungen sind weniger anfällig für das Vergilben und nicht toxisch. Die Epoxyverbindung weist gemäß dieser Schrift allerdings im Durchschnitt zwei oder mehr Epoxygruppen pro Molekül auf. Die Epoxyverbindung dient hier dazu, um Polyestermoleküle miteinander zu vernetzen und nicht zum Aufbau von OH-terminierten Polyestermolekülen.

DE 28 49 549 A1 offenbart ein Verfahren zur Herstellung von Polyether-Polyester-Polyolen durch Umsetzung eines Polyetherpolyols mit einem Polycarbonsäureanhydrid zu einem Säurehalbester. Anschließend wird der Säure-Halbester mit einem Alkylenoxid zu einem Produkt mit einer Säurezahl von kleiner als 5 mg KOH/g umgesetzt. Die Umsetzung des Alkylenoxids mit dem Säure-Halbester wird in Gegenwart von 50 bis 100 ppm, bezogen auf das Ausgangs-Polyetherpolyol, eines Trialkylamins mit 2 bis 4 Kohlenstoffatomen in der Alkylkette durchgeführt. Das erhaltene Polyol basiert jedoch immer noch auf Polyethern und nicht auf Polyestern.

US 4,144,395 offenbart ein Verfahren zur Herstellung von Polyetherester, wobei durch Umsetzung eines Polyetherpolyols mit Anydrid ein Halbester gebildet wird, der mit Epoxiden zu Polyetherester umgesetzt wird, wobei als Katalysatoren Alkylamine eingesetzt werden. Der in den Beispielen 1 und 2 von US 4,144,395 intermediär erhaltene Halbester aus Maleinsäure (0,75 mol) und trifunktionellem Polyetherpolyol (0,75 mol) unterscheidet sich strukturell von dem gemäß der vorliegenden Erfindung eingesetzten Carboxyl-Endgruppen umfassenden Polyester.

Es besteht folglich weiterhin der Bedarf an alternativen Herstellungsverfahren für Polyesterpolyole mit sekundären Hydroxy-Endgruppen.

Gegenstand der Erfindung ist ein Verfahren zur Herstellung von Polyesterpolyolen mit sekundären Hydroxyl-Endgruppen, umfassend den Schritt der Reaktion eines Carboxyl-Endgruppen umfassenden Polyesters mit einem Epoxid der allgemeinen Formel (1): 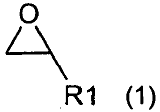 wobei R1 für einen Alkylrest oder einen Arylrest steht und die Reaktion in Gegenwart eines Katalysators durchgeführt wird, welcher pro Molekül mindestens ein Stickstoffatom umfasst. Das erfindungsgemäße Verfahren zeichnet sich dadurch aus, dass der Carboxyl-Endgruppen umfassende Polyester eine Säurezahl von ≥ 25 mg KOH/g bis ≤ 400 mg KOH/g und eine Hydroxylzahl von ≤ 5 mg KOH/g aufweist und dass der Carboxyl-Endgruppen umfassende Polyester hergestellt wird, indem pro Mol Hydroxylgruppen eines Alkohols ≥ 1,03 Mol bis ≤ 1,90 Mol Carboxylgruppen oder Carboxylgruppenäquivalente einer Säurekomponente eingesetzt werden.

Erfindungsgemäß hergestellte Polyesterpolyole haben den Vorteil, dass wegen der geringeren Reaktionsgeschwindigkeit ihrer sekundären Hydroxyl-Endgruppen in der Weiterverarbeitung zu Polyurethanpolymeren und insbesondere Polyurethanschäumen eine größere Bandbreite an Katalysatorsystemen einsetzbar ist. Insbesondere können teilweise Zinnkatalysatoren als Ersatz für Aminkatalysatoren verwendet werden. Ein geringerer Anteil an Aminkatalysatoren wirkt sich günstig auf Eigenschaften wie Geruch und Alterungsbeständigkeit der Polyurethane aus.

Die Säurezahl der Carboxyl-Endgruppen umfassenden Polyester lässt sich anhand der Norm DIN 53402 bestimmen und kann auch ≥ 30 mg KOH/g bis ≤ 300 mg KOH/g oder ≥ 50 mg KOH/g bis ≤ 250 mg KOH/g betragen. Die Hydroxylzahl der Carboxyl-Endgruppen umfassenden Polyester lässt sich anhand der Norm DIN 53240 bestimmen und kann auch ≤ 3 mg KOH/g oder ≤ 1 mg KOH/g betragen.

Zur Umsetzung mit dem Epoxid der allgemeinen Formel (1) eignen sich grundsätzlich alle Carboxyl-Endgruppen umfassenden Polyester, sofern sie den Bedingungen der erfindungsgemäßen Säure- und Hydroxylzahlen genügen. Diese Polyester werden auch synonym als Polyestercarboxylate bezeichnet. Polyestercarboxylate können durch Polykondensation aus niedermolekularen Polyolen und niedermolekularen Polycarbonsäuren, einschließlich deren Anhydriden, und deren Alkylestern hergestellt werden. Weiterhin können Hydroxycarbonsäuren einschließlich deren innerer Anhydride (Lactone) verwendet oder mitverwendet werden.

Die erfindungsgemäß einsetzbaren Polyestercarboxylate haben überwiegend Carboxyl-Endgruppen. So können die Endgruppen beispielsweise in einem Anteil von ≥ 90 mol-%, von ≥ 95 mol-% oder von ≥ 98 mol-% Carboxylgruppen sein. Demgegenüber weisen sie nur in einem sehr untergeordnetem Maße Hydroxyl-Endgruppen auf, wie sich aus der erfindungsgemäßen Vorgabe der Hydroxylzahlen ergibt. Unabhängig zum vorher Ausgeführten kann beispielsweise die Anzahl der Carboxyl-Endgruppen die Anzahl der Hydroxyl-Endgruppen um das ≥ 5-fache oder sogar das ≥ 10-fache übersteigen. Geeignete Polyestercarboxylate können Molekulargewichte im Bereich von ≥ 400 Da bis ≤ 10000 Da, bevorzugt von ≥ 450 bis ≤ 6000 Da, aufweisen. Ebenfalls unabhängig vom vorher Ausgeführten kann die Anzahl der Carboxyl-Endgruppen im Polyestercarboxylat 2, 3, 4, 5 oder 6 betragen. Die durchschnittliche Funktionalität der Polyestercarboxylate kann beispielsweise ≥ 2 bis ≤ 3 sein.

Zur Herstellung der Polyestercarboxylate einsetzbare niedermolekulare Polyole sind insbesondere solche mit Hydroxylfunktionalitäten von ≥ 2 bis ≤ 8. Sie haben zum Beispiel ≥ 2 bis ≤ 36, bevorzugt ≥ 2 bis ≤ 12 C-Atome. Allgemein ist es vorteilhaft, wenn die Polyole α,ω-Polyole, insbesondere α,β)-Diole oder zu mindestens 90 Mol-% α,ω-Diole sind. Ganz besonders bevorzugt sind Polyole aus der Gruppe umfassend Ethylenglykol und Diethylenglykol und deren höhere Homologe, weiterhin 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol und deren höhere Homologe, weiterhin 2-Methylpropandiol-1,3, Neopentylglykol, 3-Methylpentandiol-1,5, weiterhin Glycerin, Pentaerythrit, 1,1,1-Trimethylolpropan und/oder Kohlenhydrate mit 5 bis 12 C-Atomen, wie Isosorbid.

Ebenfalls einsetzbar sind weiterhin 1,2-Propandiol, Dipropylenglykol und dessen höhere Homologe.

Selbstverständlich können auch Gemische von Polyolen eingesetzt werden, wobei die genannten Polyole mindestens 90 Mol-% aller Hydroxylgruppen beisteuern.

Zur Herstellung der Polyestercarboxylate einsetzbare niedermolekulare Polycarbonsäuren oder deren Säureäquivalente wie zum Beispiel Anhydride haben insbesondere 2 bis 36, bevorzugt 2 bis 12 C-Atome. Die niedermolekularen Polycarbonsäuren können aliphatisch oder aromatisch sein. Sie können ausgewählt werden aus der Gruppe umfassend Bernsteinsäure, Fumarsäure, Maleinsäure, Maleinsäureanhydrid, Glutarsäure, Adipinsäure, Sebacinsäure, Korksäure, Azelainsäure, 1,10-Decandicarbonsäure, 1, 12-Dodecandicarbonsäure, Phthalsäure, Phthalsäureanhydrid, Isophthalsäure, Terephthalsäure, Pyromellitsäure und/oder Trimellitsäure.

Selbstverständlich können auch Gemische niedermolekularer Polycarbonsäuren eingesetzt werden, wobei die genannten Polycarbonsäuren mindestens 90 Mol-% aller Carboxylgruppen beisteuern.

Werden Hydroxycarbonsäuren einschließlich deren innerer Anhydride (Lactone) verwendet oder mitverwendet, dann entstammen diese bevorzugt aus der Gruppe Caprolacton beziehungsweise 6-Hydroxycapronsäure.

Die Polykondensation erfolgt bevorzugt ohne Katalysator, kann aber auch durch die dem Fachmann bekannten Katalysatoren katalysiert werden. Die Polykondensation kann nach geläufigen Methoden, zum Beispiel bei erhöhter Temperatur, im Vakuum, als Azeotropveresterung und nach dem Stickstoffblasverfahren durchgeführt werden. Zur Erreichung der erfindungsgemäß vorgesehenen Säurezahlen und Hydroxylzahlen wird die Polykondensation nicht auf einer bestimmten Stufe abgebrochen, sondern unter Entfernen des gebildeten Wassers bis zu einem möglichst vollständigen Umsatz der OH-Gruppen des Alkohols unter Bildung von Carboxyl-Endgruppen durchgeführt.

Das Epoxid der allgemeinen Formel (1) ist ein terminales Epoxid mit einem Substituenten R1, welcher ein Alkylrest oder ein Arylrest sein kann. Der Begriff "Alkyl" umfasst allgemein im Zusammenhang der gesamten Erfindung Substituenten aus der Gruppe n-Alkyl wie Methyl, Ethyl oder Propyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten wie Phenyl und/oder mehrkernige Carbo- oder Heteroarylsubstituenten. Das molare Verhältnis von Epoxid zu Carboxyl-Endgruppe im erfindungsgemäßen Verfahren kann beispielsweise in einem Bereich von ≥ 0,9:1 bis ≤ 10: 1, bevorzugt von ≥ 0,95:1 bis ≤ 5:1 und mehr bevorzugt von ≥ 0,98:1 bis ≤ 3:1 liegen.

Die Reaktion der Polyestercarboxylate mit dem Epoxid erfolgt in Gegenwart eines Katalysators, welcher mindestens ein Stickstoffatom im Molekül umfasst. Die Menge dieses stickstoffhaltigen Katalysators, bezogen auf die Gesamtmasse des Reaktionsansatzes, kann beispielsweise ≥ 10 ppm bis ≤ 10000 ppm, bevorzugt ≥ 50 ppm bis ≤ 5000 ppm und mehr bevorzugt ≥ 100 ppm bis ≤ 2000 ppm betragen.

Durch die Reaktion der Carboxyl-Gruppen des Polyesters mit dem Epoxid entstehen unter Ringöffnung je nach Ort des Angriffs auf den Epoxidring primäre oder sekundäre Alkohole. Vorzugsweise reagieren ≥ 80%, ≥ 90% oder ≥ 95% der Carboxyl-Gruppen mit dem Epoxid und es wird vorzugsweise ein Anteil an sekundären Hydroxyl-Gruppen von ≥ 50 Mol-% bis ≤ 100 Mol-% oder von ≥ 60 Mol-% bis ≤ 85 Mol-% erhalten.

In einer Ausführungsform des erfindungsgemäßen Verfahrens wird der Carboxyl-Endgruppen umfassende Polyester hergestellt, indem pro Mol Hydroxylgruppen eines Alkohols ≥ 1,03 Mol bis ≤ 1,90 Mol Carboxylgruppen oder Carboxylgruppenäquivalente einer Säurekomponente eingesetzt werden. Durch den Überschuss der Carboxylgruppen oder deren Äquivalente wie Anhydride lässt sich erreichen, dass ein weit überwiegender Teil der Endgruppen oder sogar alle Endgruppen des Polyesters Carboxylgruppen sind. In der nachfolgenden Reaktion mit dem Epoxid können diese dann zu den entsprechenden Alkoholen weiter umgesetzt werden. Der Überschuss an Carboxylgruppen kann auch ≥ 1,04 Mol bis ≤ 1,85 Mol oder ≥ 1,05 Mol bis ≤ 1,5 Mol pro Mol Hydroxylgruppen betragen.

In einer weiteren Ausführungsform des erfindungsgemäßen Verfahrens wird der Carboxyl-Endgruppen umfassende Polyester unmittelbar vor der Reaktion mit dem Epoxid der allgemeinen Formel (1) hergestellt. Dieses bedeutet, dass direkt im Anschluss an die Herstellung des Polyesters die Umsetzung mit dem Epoxid unter Verwendung eines Katalysators mit mindestens einem Stickstoffatom pro Molekül durchgeführt wird. Vorteilhafterweise wird die Umsetzung durchgeführt, indem das Epoxid dem Reaktionsgemisch aus der Polyestersynthese hinzugefügt wird. Dieses erfolgt vorteilhafterweise in derselben Produktionsanlage. Auf diese Weise wird Produktionszeit eingespart.

In einer weiteren Ausführungsform des erfindungsgemäßen Verfahrens ist der Carboxyl-Endgruppen umfassende Polyester erhältlich aus der Reaktion von

Ethylenglykol und Diethylenglykol sowie deren höhere Homologe, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und/oder 1,1,1-Trimethylolpropan
mit
Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und/oder Caprolacton.

In einer weiteren Ausführungsform des erfindungsgemäßen Verfahrens ist der Katalysator ausgewählt aus der Gruppe umfassend:
(A) Amine der allgemeinen Formel (2): 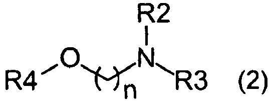 wobei gilt:
   R2 und R3 sind unabhängig voneinander Wasserstoff, Alkyl oder Aryl; oder
   R2 und R3 bilden gemeinsam mit dem sie tragenden N-Atom einen aliphatischen, ungesättigten oder aromatischen Heterozyklus;
   n ist eine ganze Zahl von 1 bis 10, also 1, 2, 3, 4, 5, 6, 7, 8, 9 oder 10;
   R4 ist Wasserstoff, Alkyl oder Aryl; oder
   R4 steht für -(CH₂)ₓ-N(R41)(R42), wobei gilt:
      R41 und R42 sind unabhängig voneinander Wasserstoff, Alkyl oder Aryl; oder
      R41 und R42 bilden gemeinsam mit dem sie tragenden N-Atom einen aliphatischen, ungesättigten oder aromatischen Heterozyklus;
      x ist eine ganze Zahl von 1 bis 10, also 1, 2, 3, 4, 5, 6, 7, 8, 9 oder 10;
(B) Amine der allgemeinen Formel (3): 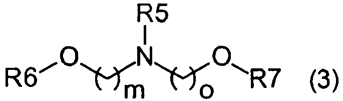 wobei gilt:
   R5 ist Wasserstoff, Alkyl oder Aryl;
   R6 und R7 sind unabhängig voneinander Wasserstoff, Alkyl oder Aryl;
   m und o sind unabhängig voneinander eine ganze Zahl von 1 bis 10, also 1, 2, 3, 4, 5, 6, 7, 8, 9 oder 10;
      und/oder:
(C) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

Die genannten Katalysatoren können die Reaktion der Carboxyl-Gruppen mit dem Epoxid in einer Weise beeinflussen, dass ein höherer Anteil an gewünschten sekundären OH-Endgruppen im Polyesterpolyol erhalten wird.

Amine der allgemeinen Formel (2) können im weitesten Sinne als Aminoalkohole oder deren Ether beschrieben werden. Ist R4 Wasserstoff, so sind die Katalysatoren in eine Polyurethanmatrix einbaubar, wenn das Polyesterpolyol mit einem Polyisocyanat umgesetzt wird. Dieses ist vorteilhaft, um das Austreten des Katalysators, der im Falle von Aminen mit nachteiligen Geruchsproblemen einhergehen kann, an die Polyurethanoberfläche, die sogenannte "fogging"-oder VOC (volatile organic compounds)-Problematik, zu verhindern.

Amine der allgemeinen Formel (3) können im weitesten Sinne als Amino(bis)alkohole oder deren Ether beschrieben werden. Sind R6 oder R7 Wasserstoff, so sind diese Katalysatoren ebenfalls in eine Polyurethanmatrix einbaubar.

In einer weiteren Ausführungsform des erfindungsgemäßen Verfahrens ist in dem Epoxid der allgemeinen Formel (1) R1 Methyl, Ethyl, n-Propyl, iso-Propyl, n-Butyl, sec-Butyl, iso-Butyl, tert-Butyl, Cyclohexyl oder Phenyl. Bevorzugt ist hierbei, dass R1 Methyl ist. Dann ist das eingesetzte Epoxid Propylenoxid.

In einer weiteren Ausführungsform des erfindungsgemäßen Verfahrens sind in dem Amin der allgemeinen Formel (2) R2 und R3 Methyl, R4 ist Wasserstoff und n = 2 oder aber R2 und R3 sind Methyl, R4 ist -(CH₂)₂-N(CH₃)₂ und n = 2. Insgesamt ergibt sich also entweder N,N-Dimethylethanolamin oder Bis(2-(dimethylamino)ethyl)ether.

In einer weiteren Ausführungsform des erfindungsgemäßen Verfahrens ist in dem Amin der allgemeinen Formel (3) R5 Methyl, R6 und R7 sind Wasserstoff, m = 2 und o = 2. Insgesamt ergibt sich also N-Methyldiethanolamin.

In einer weiteren Ausführungsform des erfindungsgemäßen Verfahrens findet die Reaktion mit dem Epoxid der allgemeinen Formel (1) bei einer Temperatur von ≥ 70 °C bis ≤ 150 °C statt. Die Reaktionstemperatur kann vorzugsweise ≥ 80 °C bis ≤ 130 °C betragen.

Gegenstand der vorliegenden Erfindung ist weiterhin ein Polyesterpolyol mit sekundären Hydroxyl-Endgruppen, welches erhältlich ist aus der Reaktion eines Carboxyl-Endgruppen umfassenden Polyesters mit einem Epoxid der allgemeinen Formel (4) in Gegenwart eines Katalysators, welcher pro Molekül mindestens ein Stickstoffatom umfasst: 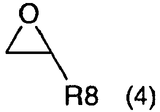 wobei R8 für einen Alkylrest oder einen Arylrest steht und wobei der Carboxyl-Endgruppen umfassende Polyester eine Säurezahl von ≥ 25 mg KOH/g bis ≤ 400 mg KOH/g und eine Hydroxylzahl von ≤ 5 mg KOH/g aufweist. Die Reaktion der Polyestercarboxylate mit dem Epoxid erfolgt in Gegenwart eines Katalysators, welcher mindestens ein Stickstoffatom im Molekül umfasst. Die Menge dieses stickstoffhaltigen Katalysators, bezogen auf die Gesamtmasse des Reaktionsansatzes, kann beispielsweise ≥ 10 ppm bis ≤ 10000 ppm, bevorzugt ≥ 50 ppm bis ≤ 5000 ppm und mehr bevorzugt ≥ 100 ppm bis ≤ 2000 ppm betragen.

Insbesondere ist dieses Polyesterpolyol durch ein erfindungsgemäßes Verfahren erhältlich. Die Polyester lassen sich mit den üblichen Methoden analysieren, beispielsweise durch Totalhydrolyse und Trennung der Hydrolyseprodukte mittels HPLC. Wie bereits erwähnt, haben die erfindungsgemäßen Polyesterpolyole den Vorteil, dass wegen der geringeren Reaktionsgeschwindigkeit ihrer sekundären Hydroxyl-Endgruppen in der Weiterverarbeitung zu Polyurethanpolymeren und insbesondere Polyurethanschäumen eine größere Bandbreite an Katalysatorsystemen einsetzbar ist.

Die Säurezahl der Carboxyl-Endgruppen umfassenden Polyester lässt sich anhand der Norm DIN 53402 bestimmen und kann auch ≥ 30 mg KOH/g bis ≤ 300 mg KOH/g oder ≥ 50 mg KOH/g bis ≤ 250 mg KOH/g betragen. Die Hydroxylzahl der Carboxyl-Endgruppen umfassenden Polyester lässt sich anhand der Norm DIN 53240 bestimmen und kann auch ≤ 3 mg KOH/g oder ≤ 1 mg KOH/g betragen.

Vorteilhafterweise ist die Alkoholkomponente, aus der der Carboxyl-Endgruppen umfassende Polyester aufgebaut wird, ein α,ω-Polyol, insbesondere ein α,ω-Diol oder zu mindestens 90 Mol-% ein α,ω-Diol.

In einer Ausführungsform des erfindungsgemäßen Polyesterpolyols ist der Carboxyl-Endgruppen umfassende Polyester erhältlich aus der Reaktion von
Ethylenglykol und Diethylenglykol sowie deren höhere Homologe, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und/oder 1,1,1-Trimethylolpropan
mit
Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und/oder Caprolacton.

In einer weiteren Ausführungsform des erfindungsgemäßen Polyesterpolyols beträgt der molare Anteil an sekundären Hydroxylgruppen ≥ 50 mol-% bis ≤ 100 mol-%. Hierunter ist der molare Anteil in dem Polyesterpolyol insgesamt, also nicht auf ein einzelnes Molekül bezogen, zu verstehen. Er lässt sich zum Beispiel mittels ¹H-NMR-Spektroskopie bestimmen. Der Anteil kann auch ≥ 60 mol-% bis ≤ 99 mol-% betragen. Je größer der Anteil an sekundären Hydroxylgruppen im Polyesterpolyol, desto langsamer ist die Reaktionsgeschwindigkeit bei der Polyurethanherstellung und desto mehr Möglichkeiten ergeben sich in der Variation der Katalysatoren.

In einer weiteren Ausführungsform der erfindungsgemäßen Polyesterpolyol-Zusammensetzung ist in der allgemeinen Formel (4) R8 Methyl, Ethyl, n-Propyl, iso-Propyl, n-Butyl, sec-Butyl, iso-Butyl, tert-Butyl, Cyclohexyl oder Phenyl. Vorzugsweise ist R8 Methyl. Dann ist das Polyesterpolyol mittels Propylenoxid hergestellt worden.

Ein weiterer Gegenstand der vorliegenden Erfindung ist eine Polyesterpolyol-Zusammensetzung, umfassend ein erfindungsgemäßes Polyesterpolyol sowie weiterhin:
(A) Amine der allgemeinen Formel (5): 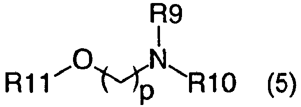 wobei gilt:
   R9 und R10 sind unabhängig voneinander Wasserstoff, Alkyl oder Aryl; oder
   R9 und R10 bilden gemeinsam mit dem sie tragenden N-Atom einen aliphatischen,
   ungesättigten oder aromatischen Heterozyklus;
   p ist eine ganze Zahl von 1 bis 10, also 1, 2, 3, 4, 5, 6, 7, 8, 9 oder 10;
   R11 ist Wasserstoff, Alkyl oder Aryl; oder
   R11 steht für -(CH₂)_{y}-N(R12)(R13), wobei gilt:
      R12 und R13 sind unabhängig voneinander Wasserstoff, Alkyl oder Aryl; oder
      R12 und R13 bilden gemeinsam mit dem sie tragenden N-Atom einen aliphatischen, ungesättigten oder aromatischen Heterozyklus;
      y ist eine ganze Zahl von 1 bis 10, also 1, 2, 3, 4, 5, 6, 7, 8, 9 oder 10;
(B) Amine der allgemeinen Formel (6): 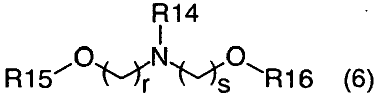 wobei gilt:
   R14 ist Wasserstoff, Alkyl oder Aryl;
   R15 und R16 sind unabhängig voneinander Wasserstoff, Alkyl oder Aryl;
   r und s sind unabhängig voneinander eine ganze Zahl von 1 bis 10, also 1, 2, 3, 4, 5, 6, 7, 8, 9 oder 10;
      und/oder:
(C) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

Solche Verbindungen können in bestimmten Varianten auch als sogenannte Treibkatalysatoren verwendet werden, das heißt, sie katalysieren bevorzugt die Reaktion der Isocyanatgruppen mit Wasser unter Bildung von Kohlendioxid, in geringerem Ausmaß auch deren Reaktion mit Hydroxylgruppen unter Bildung von Urethangruppen. Daher kann diese Zusammensetzung unmittelbar weiter in der Herstellung von Polyurethanen eingesetzt werden. Bevorzugt sind N,N-Dimethylethanolamin, Bis(2-(dimethylamino)ethyl)ether oder N-Methyldiethanolamin. Die Menge dieser Verbindungen (A), (B) und/oder (C) kann relativ zum erfindungsgemäßen Polyol beispielsweise ≥ 10 ppm bis ≤ 10000 ppm, bevorzugt ≥ 50 ppm bis ≤ 5000 ppm und mehr bevorzugt ≥ 100 ppm bis ≤ 2000 ppm betragen.

Ein weiterer Gegenstand der vorliegenden Erfindung ist ein Polyurethanpolymer, erhältlich aus der Reaktion eines Polyisocyanats mit einem erfindungsgemäßen Polyesterpolyol oder einer erfindungsgemäßen Polyesterpolyol-Zusammensetzung.

Die vorliegende Erfindung wird anhand der nachfolgenden Beispiele weiter erläutert. Hierbei haben die verwendeten Materialien und Abkürzungen die folgende Bedeutung und Bezugsquellen:

| | |
|---|---|
| Diethylenglykol (DEG): | Ineos |
| Adipinsäure: | BASF |
| 2,2,2-Diazabicyclooctan (DABCO): | Aldrich |
| Imidazol: | Aldrich |
| N-Methylimidazol: | Acros Organics |
| Dimethylbenzylamin (DMBA): | Aldrich |
| N,N-Dimethylethanolamin (DMEA): | Aldrich |
| N-Methyldiethanolamin (MDEA): | Aldrich |
| Bis(2-(dimethylamino)ethyl)ether (DMAEE): | Alfa Aesar |
| 2,2'-Dimorpholinyldiethylether (DMDEE): | Aldrich |
| 1,1,1-Trimethylolpropan (TMP): | Aldrich |

Die Analysen wurden wie folgt durchgeführt:
   Viskosität: Rheometer MCR 51 der Firma Anton Paar
   Verhältnis der primären und sekundären OH-Gruppen: mittels ¹H-NMR (Bruker DPX 400, Deuterochloroform)
   Hydroxylzahl: anhand der Norm DIN 53240
   Säurezahl: anhand der Norm DIN 53402

### A) Herstellung der Polyestercarboxylate

### Beispiel A-1:

In einem 4-Liter 4-Halskolben, ausgestattet mit Heizpilz, mechanischem Rührwerk, Innenthermometer, 40 cm-Füllkörper-Kolonne, Kolonnenkopf, absteigendem Intensivkühler, sowie Membranvakuumpumpe wurden 3646 g (34,4 Mol) Diethylenglykol und 5606 g (38,4 Mol) Adipinsäure unter Stickstoffüberschleierung vorgelegt und unter Rühren im Verlauf von 1 Stunde auf 200 °C erhitzt, wobei bei einer Kopftemperatur von 100 °C Wasser abdestillierte. Man senkte anschließend im Verlauf von 90 Minuten den Innendruck langsam auf 15 mbar ab und vervollständigte die Reaktion für weitere 24 Stunden. Man kühlte ab und bestimmte folgende Eigenschaften des Produkts:

| | |
|---|---|
| Hydroxylzahl: | 0,5 mg KOH/g |
| Säurezahl: | 58,3 mg KOH/g |
| Viskosität: | 690 mPas (75 °C), 320 mPas (100 °C) |

### Beispiel A-2:

Analog zum Vorgehen in Beispiel A-1 wurden 3184 g (30,04 Mol) Diethylenglykol, 349 g (2,06 Mol) 1,1,1-Trimethylolpropan und 5667 g (38,82 Mol) Adipinsäure zu einem Polyestercarboxylat umgesetzt.

Analyse des Produkts:

| | |
|---|---|
| Hydroxylzahl: | 0,3 mg KOH/g |
| Säurezahl: | 70,3 mg KOH/g |
| Viskosität: | 1620 mPas (75 °C) |

### B) Herstellung der Polyesterpolyole

Allgemeine Arbeitsvorschrift für die Beispiele der Gruppe B:
In einem 500 ml Glasdruckreaktor wurde die in den Tabellen 1 bis 4 angegebene Menge des entsprechenden Polyestercarboxylates sowie 0,20 g (1000 ppm bezüglich des Gesamtansatzes) des entsprechenden Katalysators unter Schutzgas (Stickstoff) vorgelegt und dann auf 125 °C aufgeheizt. Anschließend wurde die in den Tabellen 1-4 angegebene Menge Propylenoxid während der angegebenen Zeit zudosiert, wobei der Reaktordruck auf 4,2 bar (absolut) gehalten wurde.
Nach der angegebenen Nachreaktionszeit unter Rühren bei 125 °C wurden leichtflüchtige Anteile bei 90 °C (1 mbar) abdestilliert und das Reaktionsgemisch anschließend auf Raumtemperatur abgekühlt.

Die Ergebnisse sind in den nachfolgenden Tabellen 1 bis 4 wiedergegeben.

**Tabelle 1**

| Beispiel | B-1 | B-2 | B-3 | B-4 |
|---|---|---|---|---|
| Polyestercarboxylat | A-1 | A-1 | A-1 | A-1 |
| Polyestercarboxylat [g] | 178,1 | 178,1 | 178,1 | 178,1 |
| Katalysator | DMEA | N-MethylImidazol | DMEA | DMEA |
| Menge Katalysator [ppm] | 1000 | 1000 | 1000 | 1000 |
| Propylenoxid [g] | 21,9 | 21,9 | 21,9 | 21,9 |
| Dosierzeit [min] | 62 | 84 | 65 | 76 |
| Nachreaktion [min] | 60 | 60 | 40 | 20 |
| Hydroxylzahl [mg KOH/g] | 55,6 | 59,5 | 54,2 | 55,4 |
| Säurezahl [mg KOH/g] | 0,03 | 0,01 | 0,45 | 0,35 |
| Viskosität [mPas, 25 °C] | 7640 | 7260 | 7695 | 7790 |
| OH-Gruppen 1°/2° [mol/mol] | 32/68 | 80/20 | 31/69 | 30/70 |

**Tabelle 2**

| Beispiel | B-5 | B-6 | B-7 | B-8 |
|---|---|---|---|---|
| Polyestercarboxylat | A-1 | A-1 | A-1 | A-2 |
| Polyestercarboxylat [g] | 183,1 | 178,1 | 178,1 | 174,05 |
| Katalysator | DMEA | MDEA | MDEA | DMEA |
| Menge Katalysator [ppm] | 1000 | 1000 | 1000 | 1000 |
| Propylenoxid [g] | 16,9 | 21,9 | 21,9 | 25,95 |
| Dosierzeit [min] | 32 | 82 | 102 | 87 |
| Nachreaktion [min] | 300 | 60 | 40 | 60 |
| Hydroxylzahl [mg KOH/g] | 55,7 | 54,6 | 54,0 | 65,2 |
| Säurezahl [mg KOH/g] | 0,01 | 0,54 | 1,33 | 0,04 |
| Viskosität [mPas, 25 °C] | 1620 | 7790 | 7890 | 18155 |
| OH-Gruppen 1°/2° [mol/mol] | 38/62 | 32/68 | 35/65 | 38/62 |

**Tabellen 3**

| Beispiel | B-9 | B-10 | B-11 | B-12 |
|---|---|---|---|---|
| Polyestercarboxylat | A-2 | A-1 | A-1 | A-1 |
| Polyestercarboxylat [g] | 174,05 | 178,1 | 178,1 | 178,1 |
| Katalysator | MDEA | DMAEE | DABCO | Imidazol |
| Menge Katalysator [ppm] | 1000 | 1000 | 1000 | 1000 |
| Propylenoxid [g] | 25,95 | 21,9 | 21,9 | 21,9 |
| Dosierzeit [min] | 195 | 80 | 70 | 53 |
| Nachreaktion [min] | 60 | 60 | 105 | 60 |
| Hydroxylzahl [mg KOH/g] | 65,8 | 54,9 | 53,5 | 58,4 |
| Säurezahl [mg KOH/g] | 0,04 | 0,11 | 0,56 | 0,01 |
| Viskosität [mPas, 25 °C] | 15790 | 8200 | 8340 | 7775 |
| OH-Gruppen 1°/2° [mol/mol] | 32/68 | 50/50 | 31/69 | 79/21 |

**Tabelle 4**

| Beispiel | B-13 | B-14 | B-15 | B-16 | B-17 |
|---|---|---|---|---|---|
| Polyestercarboxylat | A-1 | A-1 | A-1 | A-2 | A-1 |
| Polyestercarboxylat [g] | 178,1 | 178,1 | 178,1 | 174,05 | 178,1 |
| Katalysator | DMDEE | DMBA | Dimethylpiperazin | DABCO | Pyridin |
| Menge Katalysator [ppm] | 1000 | 1000 | 1000 | 1000 | 1000 |
| Propylenoxid [g] | 21,9 | 21,9 | 21,9 | 25,95 | 21,9 |
| Dosierzeit [min] | 115 | 110 | 125 | 190 | 52 |
| Nachreaktion [min] | 60 | 60 | 60 | 60 | 60 |
| Hydroxylzahl [mg KOH/g] | 50,4 | 54,7 | 52,8 | 64,5 | 58,3 |
| Säurezahl [mg KOH/g] | 2,32 | 0,02 | 1,07 | 0,06 | 3,06 |
| Viskosität [mPas, 25 °C] | 8380 | 7620 | 8010 | 18140 | 8005 |
| OH-Gruppen 1°/2° [mol/mol] | 30/70 | 34/66 | 30/70 | 33/67 | 35/65 |

Bei den eingesetzten Polyestercarboxylaten A-1 und A-2 liegen praktisch vollständig Carboxyl-Endgruppen und keine Hydroxyl-Endgruppen vor. Dieses lässt sich anhand der Hydroxylzahlen nach der Reaktion zum Polyester ablesen, welche unterhalb von 1 mg KOH/g liegen. Die Umsetzung der Polyestercarboxylate mit dem Epoxid läuft ebenfalls praktisch quantitativ an allen Carboxylgruppen des Polyestercarboxylats ab. Man erkennt den Umsatz an den niedrigen Säurezahlen und an den Hydroxylzahlen, welche den ursprünglichen Säurezahlen der Polyestercarboxylate A-1 und A-2 gut entsprechen. Pro Carboxylgruppe wurde also eine OH-Gruppe gebildet. Bestimmte Katalysatoren ermöglichen es, gewünschte sekundäre OH-Endgruppen beispielsweise in mindestens 50 mol-% zu erhalten.

## Patentansprüche

1. Verfahren zur Herstellung von Polyesterpolyolen mit sekundären Hydroxyl-Endgruppen, umfassend den Schritt der Reaktion eines Carboxyl-Endgruppen umfassenden Polyesters mit einem Epoxid der allgemeinen Formel (1): 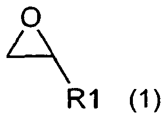 wobei R1 für einen Alkylrest oder einen Arylrest steht und die Reaktion in Gegenwart eines Katalysators durchgeführt wird, welcher pro Molekül mindestens ein Stickstoffatom umfasst, **dadurch gekennzeichnet, dass** der Carboxyl-Endgruppen umfassende Polyester eine Säurezahl von ≥ 25 mg KOH/g bis ≤ 400 mg KOH/g und eine Hydroxylzahl von ≤ 5 mg KOH/g aufweist und wobei der Carboxyl-Endgruppen umfassende Polyester hergestellt wird, indem pro Mol Hydroxylgruppen eines Alkohols ≥ 1,03 Mol bis ≤ 1,90 Mol Carboxylgruppen oder Carboxylgruppenäquivalente einer Säurekomponente eingesetzt werden.

2. Verfahren gemäß Anspruch 1, wobei der Carboxyl-Endgruppen umfassende Polyester unmittelbar vor der Reaktion mit dem Epoxid der allgemeinen Formel (1) hergestellt wird.

3. Verfahren gemäß Anspruch 1, wobei der Carboxyl-Endgruppen umfassende Polyester erhältlich ist aus der Reaktion von
Ethylenglykol und Diethylenglykol sowie deren höhere Homologe, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und/oder 1,1,1-Trimethylolpropan
mit
Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und/oder Caprolacton.

4. Verfahren gemäß Anspruch 1, wobei der Katalysator ausgewählt ist aus der Gruppe umfassend:
(A) Amine der allgemeinen Formel (2): 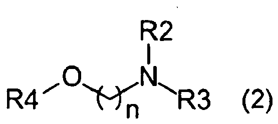 wobei gilt:
R2 und R3 sind unabhängig voneinander Wasserstoff, Alkyl oder Aryl; oder
R2 und R3 bilden gemeinsam mit dem sie tragenden N-Atom einen aliphatischen,
ungesättigten oder aromatischen Heterozyklus;
n ist eine ganze Zahl von 1 bis 10;
R4 ist Wasserstoff, Alkyl oder Aryl; oder
R4 steht für -(CH₂)ₓ-N(R41)(R42), wobei gilt:
R41 und R42 sind unabhängig voneinander Wasserstoff, Alkyl oder Aryl; oder R41 und R42 bilden gemeinsam mit dem sie tragenden N-Atom einen aliphatischen,
ungesättigten oder aromatischen Heterozyklus;
x ist eine ganze Zahl von 1 bis 10;
(B) Amine der allgemeinen Formel (3): 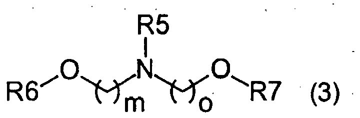 wobei gilt:
R5 ist Wasserstoff, Alkyl oder Aryl;
R6 und R7 sind unabhängig voneinander Wasserstoff, Alkyl oder Aryl;
m und o sind unabhängig voneinander eine ganze Zahl von 1 bis 10;
und/oder:
(C) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

5. Verfahren gemäß Anspruch 1, wobei in dem Epoxid der allgemeinen Formel (1) R1 Methyl, Ethyl, n-Propyl, iso-Propyl, n-Butyl, sec-Butyl, iso-Butyl, tert-Butyl, Cyclohexyl oder Phenyl ist.

6. Verfahren gemäß Anspruch 4, wobei in dem Amin der allgemeinen Formel (2) R2 und R3 Methyl sind, R4 Wasserstoff ist und n = 2 ist oder aber R2 und R3 Methyl sind, R4 -(CH₂)₂-N(CH₃)₂ ist und n = 2 ist.

7. Verfahren gemäß Anspruch 4, wobei in dem Amin der allgemeinen Formel (3) R5 Methyl ist, R6 und R7 Wasserstoff sind, m = 2 ist und o = 2 ist.

8. Verfahren gemäß Anspruch 1, wobei die Reaktion mit dem Epoxid der allgemeinen Formel (1) bei einer Temperatur von ≥ 70 °C bis ≤ 150 °C stattfindet.

9. Polyesterpolyol mit sekundären Hydroxyl-Endgruppen, erhältlich aus der Reaktion eines Carboxyl-Endgruppen umfassenden Polyesters mit einem Epoxid der allgemeinen Formel (4) in Gegenwart eines Katalysators, welcher pro Molekül mindestens ein Stickstoffatom umfasst, 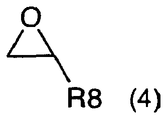 wobei R8 für einen Alkylrest oder einen Arylrest steht, **dadurch gekennzeichnet, dass** der Carboxyl-Endgruppen umfassende Polyester eine Säurezahl von ≥ 25 mg KOH/g bis ≤ 400 mg KOH/g und eine Hydroxylzahl von ≤ 5 mg KOH/g aufweist und dass der Carboxyl-Endgruppen umfassende Polyester hergestellt wird, indem pro Mol Hydroxylgruppen eines Alkohols ≥ 1,03 Mol bis ≤ 1,90 Mol Carboxylgruppen oder Carboxylgruppenäquivalente einer Säurekomponente eingesetzt werden.

10. Polyesterpolyol gemäß Anspruch 9, wobei der Carboxyl-Endgruppen umfassende Polyester erhältlich ist aus der Reaktion von
Ethylenglykol und Diethylenglykol sowie deren höhere Homologe, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und/oder 1,1,1-Trimethylolpropan
mit
Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und/oder Caprolacton.

11. Polyesterpolyol gemäß Anspruch 9, wobei der molare Anteil von sekundären Hydroxylgruppen ≥ 50 mol-% bis ≤ 100 mol-% beträgt.

12. Polyesterpolyol gemäß Anspruch 9, wobei in der allgemeinen Formel (4) R8 Methyl, Ethyl, n-Propyl, iso-Propyl, n-Butyl, sec-Butyl, iso-Butyl, tert-Butyl, Cyclohexyl oder Phenyl ist.

13. Polyesterpolyol-Zusammensetzung, umfassend ein Polyesterpolyol gemäß Anspruch 9 sowie weiterhin:
(A) Amine der allgemeinen Formel (5): 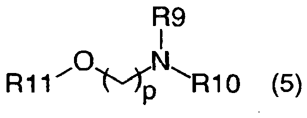 wobei gilt:
R9 und R10 sind unabhängig voneinander Wasserstoff, Alkyl oder Aryl; oder
R9 und R10 bilden gemeinsam mit dem sie tragenden N-Atom einen aliphatischen,
ungesättigten oder aromatischen Heterozyklus;
p ist eine ganze Zahl von 1 bis 10;
R11 ist Wasserstoff, Alkyl oder Aryl; oder
R11 steht für -(CH₂)_{y}-N(R12)(R13), wobei gilt:
R12 und R13 sind unabhängig voneinander Wasserstoff, Alkyl oder Aryl; oder
R12 und R13 bilden gemeinsam mit dem sie tragenden N-Atom einen aliphatischen, ungesättigten oder aromatischen Heterozyklus;
y ist eine ganze Zahl von 1 bis 10;
(B) Amine der allgemeinen Formel (6): 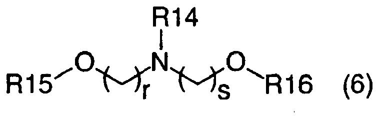 wobei gilt:
R14 ist Wasserstoff, Alkyl oder Aryl;
R15 und R16 sind unabhängig voneinander Wasserstoff, Alkyl oder Aryl;
r und s sind unabhängig voneinander eine ganze Zahl von 1 bis 10;
und/oder:
(C) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

14. Polyurethanpolymer, erhältlich aus der Reaktion eines Polyisocyanats mit einem Polyesterpolyol gemäß Anspruch 9 oder einer Polyesterpolyol-Zusammensetzung gemäß Anspruch 13.

## Claims

1. Process for preparing polyester polyols having secondary hydroxyl end groups, comprising the step of reaction of a polyester comprising carboxyl end groups with an epoxide of the general formula (1): 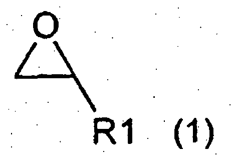 where R1 is an alkyl radical or an aryl radical and the reaction is performed in the presence of a catalyst comprising at least one nitrogen atom per molecule, **characterized in that** the polyester comprising carboxyl end groups has an acid number of ≥ 25 mg KOH/g to ≤ 400 mg KOH/g and a hydroxyl number of ≤ 5 mg KOH/g, and wherein the polyester comprising carboxyl end groups is prepared by using ≥ 1.03 mol to ≤ 1.90 mol of carboxyl groups or carboxyl group equivalents of an acid component per mole of hydroxyl groups of an alcohol.

2. Process according to Claim 1, wherein the polyester comprising carboxyl end groups is prepared immediately prior to the reaction with the epoxide of the general formula (1).

3. Process according to Claim 1, wherein the polyester comprising carboxyl end groups is obtainable from the reaction of
ethylene glycol and diethylene glycol and higher homologues thereof, propane-1,3-diol, butane-1,4-diol, hexane-1,6-diol, octane-1,8-diol, decane-1,10-diol, dodecane-1,12-diol, 2-methylpropane-1,3-diol, neopentyl glycol, 3-methylpentane-1,5-diol, glycerol, pentaerythritol and/or 1,1,1-trimethylolpropane
with
succinic acid, fumaric acid, maleic acid, maleic anhydride, glutaric acid, adipic acid, sebacic acid, decane-1,10-dicarboxylic acid, dodecane-1,12-dicarboxylic acid, phthalic acid, phthalic anhydride, isophthalic acid, terephthalic acid, pyromellitic acid, trimellitic acid and/or caprolactone.

4. Process according to Claim 1, wherein the catalyst is selected from the group comprising:
(A) amines of the general formula (2): 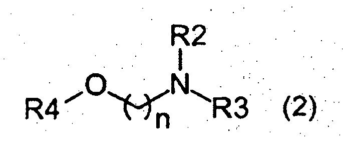 where:
R2 and R3 are each independently hydrogen,
alkyl or aryl; or
R2 and R3 together with the nitrogen atom bearing them form an aliphatic unsaturated or
aromatic heterocycle;
n is an integer from 1 to 10;
R4 is hydrogen, alkyl or aryl; or
R4 is -(CH₂)ₓ-N(R41)(R42), where:
R41 and R42 are each independently hydrogen,
alkyl or aryl; or
R41 and R42 together with the nitrogen atom
bearing them form an aliphatic unsaturated or aromatic heterocycle;
x is an integer from 1 to 10;
(B) amines of the general formula (3): 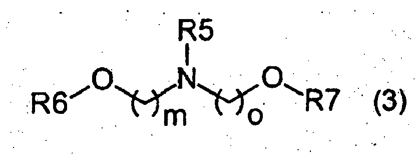 where:
R5 is hydrogen, alkyl or aryl;
R6 and R7 are each independently hydrogen,
alkyl or aryl;
m and o are each independently an integer from 1 to 10;
and/or
(C) diazabicyclo[2.2.2]octane, diazabicyclo-[5.4.0]undec-7-ene, dialkylbenzylamine, dimethylpiperazine, 2,2'-dimorpholinyldiethyl ether and/or pyridine.

5. Process according to Claim 1, wherein R1 in the epoxide of the general formula (1) is methyl, ethyl, n-propyl, isopropyl, n-butyl, sec-butyl, isobutyl, tert-butyl, cyclohexyl or phenyl.

6. Process according to Claim 4, wherein R2 and R3 in the amine of the general formula (2) are each methyl, R4 is hydrogen and n = 2, or else R2 and R3 are each methyl, R4 is -(CH₂)₂-N(CH₃)₂ and n = 2.

7. Process according to Claim 4, wherein R5 in the amine of the general formula (3) is methyl, R6 and R7 are each hydrogen, m = 2 and o = 2.

8. Process according to Claim 1, wherein the reaction with the epoxide of the general formula (1) takes place at a temperature of ≥ 70°C to ≤ 150°C.

9. Polyester polyol having secondary hydroxyl end groups, obtainable from the reaction of a polyester comprising carboxyl end groups with an epoxide of the general formula (4), in the presence of a catalyst comprising at least one nitrogen atom per molecule, 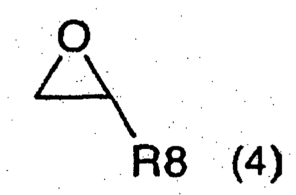 where R8 is an alkyl radical or an aryl radical, **characterized in that** the polyester comprising carboxyl end groups has an acid number of ≥ 25 mg KOH/g to ≤ 400 mg KOH/g and a hydroxyl number of ≤ 5 mg KOH/g, and the polyester comprising carboxyl end groups is prepared by using ≥ 1.03 mol to ≤ 1.90 mol of carboxyl groups or carboxyl group equivalents of an acid component per mole of hydroxyl groups of an alcohol.

10. Polyester polyol according to Claim 9, wherein the polyester comprising carboxyl end groups is obtainable from the reaction of
ethylene glycol and diethylene glycol and higher homologues thereof, propane-1,3-diol, butane-1,4-diol, hexane-1,6-diol, octane-1,8-diol, decane-1,10-diol, dodecane-1,12-diol, 2-methylpropane-1,3-diol, neopentyl glycol, 3-methylpentane-1,5-diol, glycerol, pentaerythritol and/or 1,1,1-trimethylolpropane
with
succinic acid, fumaric acid, maleic acid, maleic anhydride, glutaric acid, adipic acid, sebacic acid, decane-1,10-dicarboxylic acid, dodecane-1,12-dicarboxylic acid, phthalic acid, phthalic anhydride, isophthalic acid, terephthalic acid, pyromellitic acid, trimellitic acid and/or caprolactone.

11. Polyester polyol according to Claim 9, wherein the molar proportion of secondary hydroxyl groups is ≥ 50 mol% to ≤ 100 mol%.

12. Polyester polyol according to Claim 9, wherein R8 in the general formula (4) is methyl, ethyl, n-propyl, isopropyl, n-butyl, sec-butyl, isobutyl, tert-butyl, cyclohexyl or phenyl.

13. Polyester polyol composition comprising a polyester polyol according to Claim 9, and additionally:
(A) amines of the general formula (5): 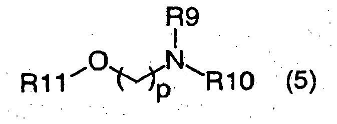 where:
R9 and R10 are each independently hydrogen,
alkyl or aryl; or
R9 and R10 together with the nitrogen atom
bearing them form an aliphatic, unsaturated or aromatic heterocycle;
p is an integer from 1 to 10;
R11 is hydrogen, alkyl or aryl; or R11 is -(CH₂)_{y}-N(R12)(R13) where:
R12 and R13 are each independently hydrogen, alkyl or aryl; or
R12 and R13 together with the nitrogen atom bearing them form an aliphatic, unsaturated or aromatic heterocycle;
y is an integer from 1 to 10;
(B) amines of the general formula (6): 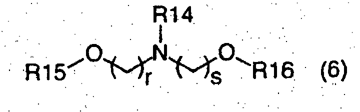 where:
R14 is hydrogen, alkyl or aryl;
R15 and R16 are each independently hydrogen,
alkyl or aryl;
r and s are each independently an integer from 1 to 10;
and/or
(C) diazabicyclo[2.2.2]octane, diazabicyclo-[5.4.0]undec-7-ene, dialkylbenzylamine, dimethylpiperazine, 2,2'-dimorpholinyldiethyl ether and/or pyridine.

14. Polyurethane polymer obtainable from the reaction of a polyisocyanate with a polyester polyol according to Claim 9 or a polyester polyol composition according to Claim 13.

## Revendications

1. Procédé pour la préparation de polyesterpolyols présentant des groupes terminaux secondaires à fonction hydroxyle, comprenant l'étape de réaction d'un polyester comprenant des groupes terminaux à fonction carboxyle avec un époxyde de formule générale (1) : 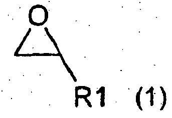 où R1 représente un radical alkyle ou un radical aryle et la réaction est réalisée en présence d'un catalyseur, qui comprend, par molécule, au moins un atome d'azote, **caractérisé en ce que** le polyester comprenant des groupes terminaux à fonction carboxyle présente un indice d'acide ≥ 25 mg de KOH/g à ≤ 400 mg de KOH/g et un indice d'hydroxyle de ≤ 5 mg de KOH/g et le polyester comprenant des groupes terminaux à fonction carboxyle étant préparé **en ce qu'**on utilise, par mole de groupes hydroxyle d'un alcool, ≥ 1,03 mole à ≤ 1,90 mole de groupes carboxyle ou d'équivalents de groupes carboxyle d'un composant acide.

2. Procédé selon la revendication 1, le polyester comprenant des groupes terminaux à fonction carboxyle étant préparé directement avant la réaction avec l'époxyde de formule générale (1).

3. Procédé selon la revendication 1, le polyester comprenant des groupes terminaux à fonction carboxyle pouvant être obtenu à partir de la réaction d'éthylèneglycol et de diéthylèneglycol ainsi que leurs homologues supérieurs, de 1,3-propanediol, de 1,4-butanediol, de 1,6-hexanediol, de 1,8-octanediol, de 1,10-décanediol, de 1,12-dodécanediol, de 2-méthylpropanediol-1,3, de néopentylglycol, de 3-méthylpentanediol-1,5, de glycérol, de pentaérythritol et/ou de 1,1,1-triméthylolpropane
avec
de l'acide succinique, de l'acide fumarique, de l'acide maléique, de l'anhydride de l'acide maléique, de l'acide glutarique, de l'acide adipique, de l'acide sébacique, de l'acide 1,10-décanedicarboxylique, de l'acide 1,12-dodécanedicarboxylique, de l'acide phtalique, de l'anhydride de l'acide phtalique, de l'acide isophtalique, de l'acide téréphtalique, de l'acide pyromellitique, de l'acide trimellitique et/ou de la caprolactone.

4. Procédé selon la revendication 1, le catalyseur étant choisi dans le groupe comprenant :
(A) les amines de formule générale (2) : 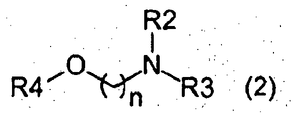 où
R2 et R3 représentent, indépendamment l'un de
l'autre, hydrogène, alkyle ou aryle ; ou
R2 et R3 forment ensemble avec l'atome de N qui
les porte un hétérocycle aliphatique, insaturé ou aromatique ;
n vaut un nombre entier de 1 à 10 ;
R4 représente hydrogène, alkyle ou aryle ; ou
R4 représente -(CH₂)ₓ-N(R41)(R42), où :
R41 et R42 représentent, indépendamment
l'un de l'autre, hydrogène, alkyle ou aryle ; ou
R41 et R42 forment ensemble avec l'atome
de N qui les porte un hétérocycle aliphatique, insaturé ou aromatique ;
x vaut un nombre entier de 1 à 10 ;
(B) les amines de formule générale (3) : 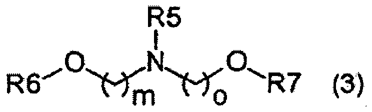 où
R5 représente hydrogène, alkyle ou aryle ;
R6 et R7 représentent, indépendamment l'un de
l'autre, hydrogène, alkyle ou aryle ;
m et o valent, indépendamment l'un de l'autre,
un nombre entier de 1 à 10 ;
et/ou
(C) le diazabicyclo[2,2,2]octane, le diazabicyclo[5,4,0]undéc-7-ène, la dialkylbenzylamine, la diméthylpipérazine, le 2,2'-dimorpholinyldiéthyléther et/ou la pyridine.

5. Procédé selon la revendication 1, où, dans l'époxyde de formule générale (1), R1 représente méthyle, éthyle, n-propyle, iso-propyle, n-butyle, sec-butyle, iso-butyle, tert-butyle, cyclohexyle ou phényle.

6. Procédé selon la revendication 4, où, dans l'amine de formule générale (2), R2 et R3 représentent méthyle, R4 représente hydrogène et n = 2 ou encore, R2 et R3 représentent méthyle, R4 représente -(CH₂)₂-N(CH₃)₂ et n = 2.

7. Procédé selon la revendication 4, où, dans l'amine de formule générale (3), R5 représente méthyle, R6 et R7 représentent hydrogène, m = 2 et o = 2.

8. Procédé selon la revendication 1, la réaction avec l'époxyde de formule générale (1) ayant lieu à une température ≥ 70°C à ≤ 150°C.

9. Polyesterpolyol présentant des groupes terminaux secondaires à fonction hydroxyle, pouvant être obtenus par la réaction d'un polyester comprenant des groupes terminaux à fonction carboxyle avec un époxyde de formule générale (4) en présence d'un catalyseur qui comprend, par molécule, au moins un atome d'azote, 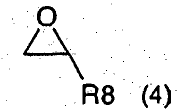 R8 représentant un radical alkyle ou un radical aryle, **caractérisé en ce que** le polyester comprenant des groupes terminaux à fonction carboxyle présente un indice d'acide ≥ 25 mg de KOH/g à ≤ 400 mg de KOH/g et un indice d'hydroxyle de ≤ 5 mg de KOH/g et **en ce que** le polyester comprenant des groupes terminaux à fonction carboxyle est préparé **en ce qu'**on utilise, par mole de groupes hydroxyle d'un alcool, ≥ 1,03 mole à ≤ 1,90 mole de groupes carboxyle ou d'équivalents de groupes carboxyle d'un composant acide.

10. Polyesterpolyol selon la revendication 9, le polyester comprenant des groupes terminaux à fonction carboxyle pouvant être obtenu à partir de la réaction d'éthylèneglycol et de diéthylèneglycol ainsi que leurs homologues supérieurs, de 1,3-propanediol, de 1,4-butanediol, de 1,6-hexanediol, de 1,8-octanediol, de 1,10-décanediol, de 1,12-dodécanediol, de 2-méthylpropanediol-1,3, de néopentylglycol, de 3-méthylpentanediol-1,5, de glycérol, de pentaérythritol et/ou de 1,1,1-triméthylolpropane
avec
de l'acide succinique, de l'acide fumarique, de l'acide maléique, de l'anhydride de l'acide maléique, de l'acide glutarique, de l'acide adipique, de l'acide sébacique, de l'acide 1,10-décanedicarboxylique, de l'acide 1,12-dodécanedicarboxylique, de l'acide phtalique, de l'anhydride de l'acide phtalique, de l'acide isophtalique, de l'acide téréphtalique, de l'acide pyromellitique, de l'acide trimellitique et/ou de la caprolactone.

11. Polyesterpolyol selon la revendication 9, la proportion molaire de groupes hydroxyle secondaires valant ≥ 50% en mole à ≤ 100% en mole.

12. Polyesterpolyol selon la revendication 9, où, dans l'époxyde de formule générale (4), R8 représente méthyle, éthyle, n-propyle, iso-propyle, n-butyle, sec-butyle, iso-butyle, tert-butyle, cyclohexyle ou phényle.

13. Composition de polyesterpolyol, comprenant un polyesterpolyol selon la revendication 9, ainsi qu'en outre :
(A) des amines de formule générale (5) : 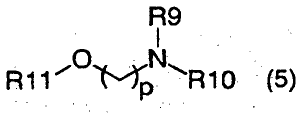 où
R9 et R10 représentent, indépendamment l'un de
l'autre, hydrogène, alkyle ou aryle ; ou R9 et R10 forment ensemble avec l'atome de N qui
les porte un hétérocycle aliphatique, insaturé ou aromatique ;
p vaut un nombre entier de 1 à 10 ; R11 représente hydrogène, alkyle ou aryle ;
ou
R11 représente -(CH₂)_{y}-N(R12)(R13), où :
R12 et R13 représentent, indépendamment
l'un de l'autre, hydrogène, alkyle ou aryle ; ou
R12 et R13 forment ensemble avec l'atome
de N qui les porte un hétérocycle aliphatique, insaturé ou aromatique ;
y vaut un nombre entier de 1 à 10 ;
(B) des amines de formule générale (6) : 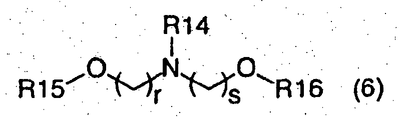 où
R14 représente hydrogène, alkyle ou aryle ;
R15 et R16 représentent, indépendamment
l'un de l'autre, hydrogène, alkyle ou aryle ;
r et s valent, indépendamment l'un de l'autre,
un nombre entier de 1 à 10 ;
et/ou
(C) du diazabicyclo[2,2,2]octane, du diazabicyclo[5,4,0]undéc-7-ène, de la dialkylbenzylamine, de la diméthylpipérazine, du 2,2'-dimorpholinyldiéthyléther et/ou de la pyridine.

14. Polymère de polyuréthane, pouvant être obtenu par la réaction d'un polyisocyanate avec un polyesterpolyol selon la revendication 9 ou une composition de polyesterpolyol selon la revendication 13.
